# FASCICULE DE BREVET EUROPEEN

(11) **EP 1 661 761 B1**
(45) Date de publication et mention de la délivrance du brevet: **16.01.2008**
(21) Numéro de dépôt: 05111195.3
(22) Date de dépôt: 23.11.2005
(51) Int. Cl.: B60R 9/045, B60R 7/02

(54) **Système de stockage et/ou d'utilisation de barres de galerie à l'intérieur d'un véhicule automobile, pavillon et véhicule corrrespondants**
Dachträgerlagerungs- und/oder -verwendungssystem im Fahrzeuginnenraum, und entsprechendes Dach und Fahrzeug
Stocking and/or use system for roof rack crossbars inside a vehicle and corresponding roof and vehicle

(30) Priorité: 26.11.2004 FR 0412604
(43) Date de publication de la demande: 31.05.2006
(73) Titulaire: WAGON SAS, 79302 Bressuire Cédex (FR)
(72) Inventeur: FOUREL, Pascal, 35400, SAINT-MALO (FR)
(74) Mandataire: Bioret, Ludovic

(56) Documents cités:
- EP-A- 1 398 220
- DE-U1- 20 122 091
- US-A1- 2002 066 760

## Description

Le domaine de l'invention est celui des galeries pour véhicule automobile. Notamment, l'invention concerne le stockage de telles barres de galerie. Plus généralement, l'invention concerne également le transport et le stockage d'objets, sur et dans un véhicule.

On connaît depuis longtemps de nombreux types de galerie. On utilise ainsi souvent des barres de galerie destinées à être montées sur des longerons, ou des rails, prévus à cet effet sur le véhicule.

De tels systèmes sont notamment prévus pour équiper le pavillon des véhicules, par exemple de type break ou monospace. Ils peuvent également être montés sur une autre partie de la carrosserie (malle arrière ou hayon par exemple).

Souvent, les pavillons des véhicules comprennent un (ou plusieurs) emplacements prédéfinis équipés de moyens de réception et de fixation des pieds de la barre de galerie.

Une amélioration à cette technique a été proposée, qui consiste à équiper le pavillon de deux longerons parallèles, et perpendiculaires aux barres de galerie, de façon que ces dernières (ou au moins l'une d'entre elles) puissent coulisser longitudinalement sur le pavillon. Cela permet notamment de définir au moins deux positions :
- une position de travail, dans laquelle deux barres, une barre avant et une barre arrière, sont réparties de part et d'autre du pavillon ;
- une position de rangement, dans laquelle les deux barres sont rapprochées l'une de l'autre, par exemple de façon à former un aileron à l'arrière du pavillon.

Dans ce dernier cas, la barre arrière peut être fixe, seule la barre avant coulissant le long des longerons.

Dans une telle situation, il est possible de défmir des barres de galerie adaptées aux véhicules, tant sur le plan esthétique que sur celui de la pénétration dans l'air. Les pieds de la barre de galerie peuvent être formés directement dans le prolongement de la traverse, et carénés, dans le même matériau et/ou le même coloris que la carrosserie.

Il arrive cependant sur certains véhicules, qu'il ne soit pas possible de prévoir des longerons longitudinaux parallèles sur le pavillon. Dans ce cas, on utilise généralement des barres de longueurs différentes, mises en place chacune à une position fixe unique prédéfinie.

On peut également revenir à des structures de barres de galerie de type plus ancien, dans lequel au moins un des pieds est coulissant le long de la traverse, de façon que l'on puisse modifier l'écartement entre les deux pieds.

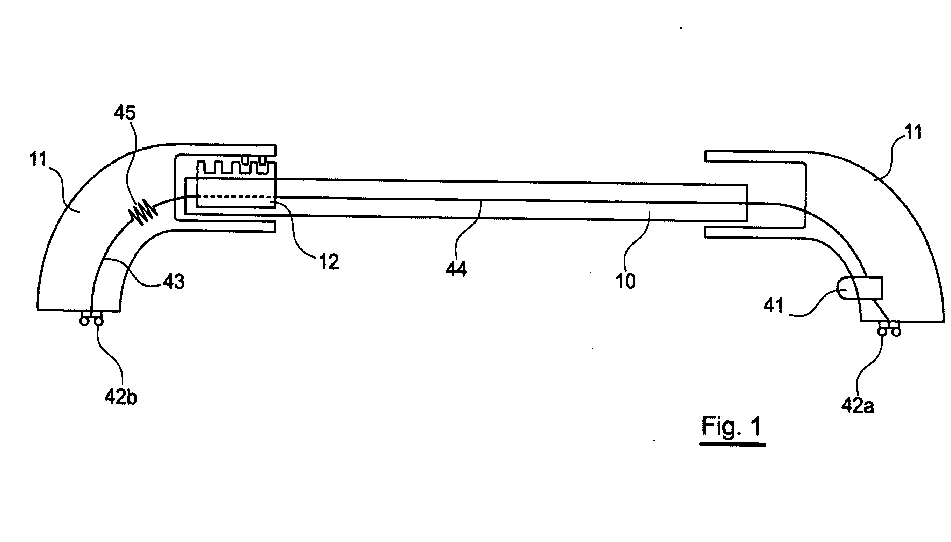

La figure 1 illustre un exemple d'une telle barre de galerie, selon un mode de réalisation avantageux décrit dans le document de brevet FR-2 816 564.

Selon cette technique, on prévoit un organe d'actionnement 44, logé à l'intérieur de l'un des pieds. Il agit d'une part sur les éléments 42a permettant le déplacement de la barre dans le longeron correspondant. Il peut par exemple s'agir de patins à rouleaux.

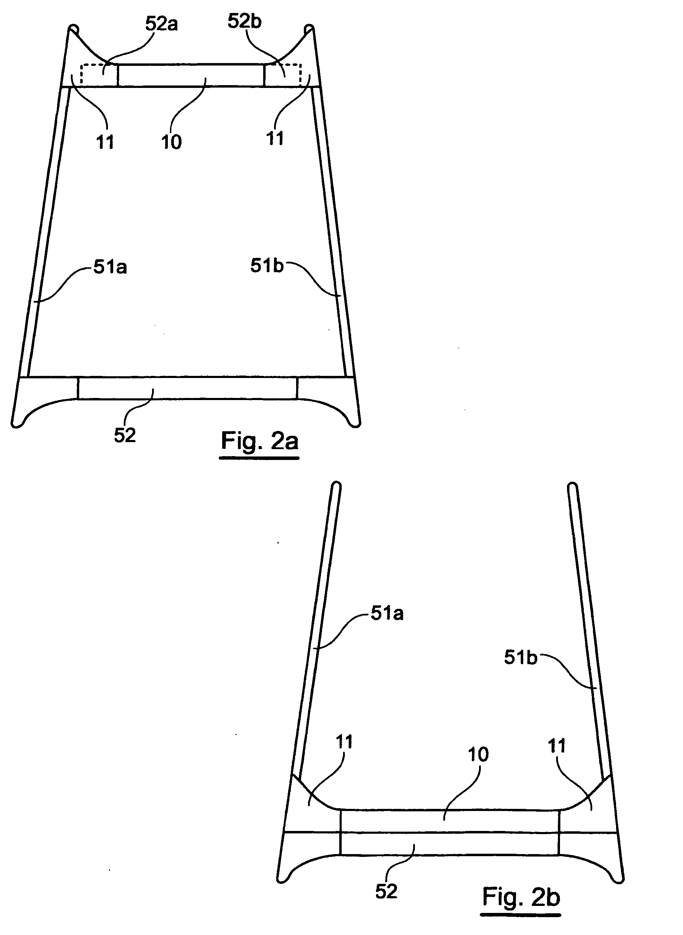

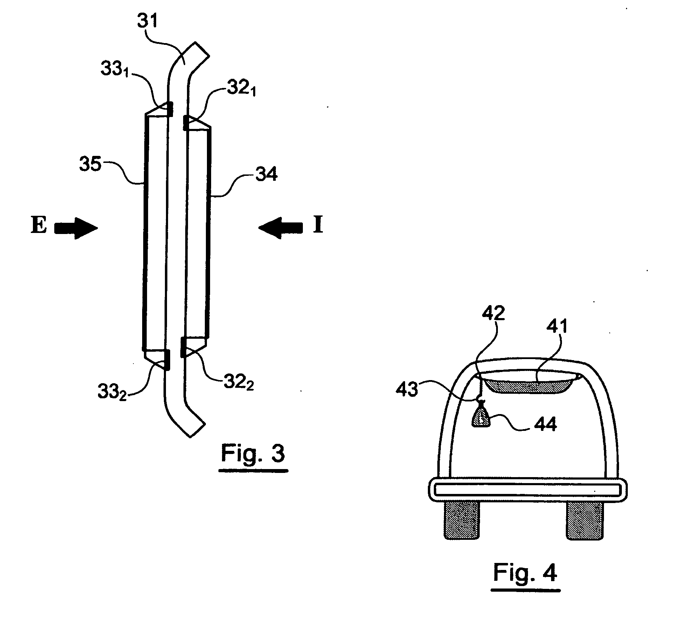

Simultanément, l'actionnement de l'organe 44 agit sur un câble 41 qui circule dans la traverse 10, jusqu'à la pièce coulissante 13 (ou un élément similaire), permettant de faire passer la crémaillère de la position de la figure 3 à celle de la figure 2.

Un second câble 43 est prévu, pour agir sur les éléments 421 de l'autre pied. Ce câble 43 est relié à la pièce coulissante 13, qui répercute l'action du premier câble 41.

Il est possible que les courses prévues pour le déplacement de la crémaillère et le déverrouillage des éléments 42b soient différentes (la seconde course étant en général plus faible). On prévoit donc un élément de compensation 45, par exemple sous la forme d'un ressort ou d'une pièce élastique, de façon que la seconde course soit effectivement plus réduite.

Bien entendu, les câbles peuvent être remplacés par d'autres moyens de transmission, tels que par exemple des tringles.

De telles barres de galerie permettent un déplacement le long de deux longerons, ou rails, non parallèles, aménagés par exemple sur le pavillon d'un véhicule automobile, comme cela est illustré par les figures 2a et 2b.

Des longerons 51a et 51b sont montés à demeure sur le pavillon d'un véhicule. Ces deux longerons sont non parallèles et peuvent présenter, par exemple, un écart de l'ordre de 10 centimètres entre la partie la plus large (correspondant ici à l'arrière du véhicule, mais l'inverse est également possible) et la partie la plus étroite (avant du véhicule).

Dans cet exemple, les barres peuvent prendre :
- une position de travail (figure 5a) dans laquelle elle se trouve à proximité de la partie avant du véhicule de façon à former, avec la barre arrière 52, une galerie pouvant recevoir divers objets à transporter ;
- une position de repos (figure 5b) dans laquelle elle est rapprochée de la barre arrière 52, et éventuellement solidarisée avec cette dernière, de façon à former un aileron.

Un inconvénient de cette approche est que les barres de galerie restent en permanence sur le véhicule, même si elles ne sont pas utilisées. Outre cette non-utilisation, cela pose un problème de pénétration dans l'air, et donc de consommation, d'exposition prolongée à l'extérieur, et donc d'usure ou de détérioration éventuelle, et de risque de vol.

Par ailleurs, on rencontre souvent des problèmes de maintien d'objets dans le coffre de véhicule. Il est noté ici que, si ces problèmes sont bien connus, ils ne sont pas liés, selon l'homme du métier, à ceux des barres de galerie cités précédemment.

On prévoit parfois, pour pallier ces problèmes, la mise en oeuvre d'éléments de maintien d'objets, tels que des filets, venant recouvrir un ou plusieurs objets transportés par exemple dans le coffre d'un véhicule.

Bien entendu, on entend dans la présente description par « coffre » le coffre d'un véhicule « trois volumes », mais également plus généralement tout espace de transport d'objets dans un véhicule, qu'il s'agisse de l'espace accessible par l'intermédiaire d'un hayon arrière dans un monospace ou un break, le coffre d'un pick-up, et plus généralement tout espace prévu pour le transport d'objet dans un véhicule automobile.

Le problème du maintien d'un ou plusieurs objets à l'intérieur d'un coffre de véhicule est bien connu. En effet, il est souhaitable de maintenir immobiles les objets stockés dans le coffre, pour éviter ce déplacement lorsque le véhicule circule, pour l'empêcher de cogner contre d'autres objets ou le véhicule, et donc de se détériorer. Pendant longtemps, l'utilisateur était contraint de prévoir des moyens pour caler les objets qu'il transportait. Il pouvait également utiliser des moyens de fixation tels que des cordes ou des tendeurs.

Plus récemment, on a proposé l'utilisation de filets de protection.

Le document DE 201 22 091 U1 propose le recours à de tels filets. Plus précisément il propose de mettre en oeuvre des rails de guidage et/ou de maintien destiné à supporter des compartiments de rangement, des planches d'occultation, des filets ou des toiles, afin de faciliter le rangement d'objets à l'intérieur d'un coffre de véhicule.

Certains véhicules sont ainsi équipés, dans leur coffre, de filets extensibles, permettant par exemple de maintenir immobile une valise, ou tout autre objet ou ensemble d'objets, sur le plancher du coffre. On a également proposé des filets s'étendant verticalement, le long des parois latérales du coffre. Dans ce dernier cas, les filets sont fixes et forment une poche. Lorsque le filet s'étend sur le plancher, il est généralement amovible, et se solidarise au plancher par ses quatre coins à des éléments de fixation prévus à cet effet.

Une fois le filet tendu au sol, il est peu aisé de placer d'autres objets, souvent plus volumineux, dans le coffre.

En outre, la fixation de ce filet n'est pas toujours facile, notamment pour les deux coins situés le plus à l'intérieur du coffre. Il peut être également difficile de fixer les deux derniers coins, notamment si le filet est trop tendu. Un autre inconvénient est que, lorsque le filet n'est pas utilisé, il faut le ranger dans un emplacement prévu à cet effet.

Par ailleurs, dans tous les cas, la surface couverte par le filet, et le volume maximal que celui-ci peut recouvrir, sont définis une fois pour toute, ils ne sont donc pas forcément adaptés à tous les objets qu'on souhaiterait maintenir pour les immobiliser et les protéger. Si l'objet est trop petit, il risque de se déplacer malgré le filet. Si l'objet est en revanche trop grand, on ne pourra pas accrocher le filet, et celui-ci sera donc inutile.

L'invention a notamment pour objectif, selon ses différents aspects, de pallier tout ou partie de ces inconvénients.

Plus précisément, un objectif de l'invention est de fournir une technique permettant d'optimiser l'utilisation de barres de galerie, et/ou leur stockage.

Selon un autre aspect de l'invention, un objectif est de fournir une technique permettant de faciliter et d'optimiser le stockage et le maintien d'objets dans un véhicule automobile.

Un autre objectif de l'invention est de fournir une telle technique, qui soit simple à mettre en oeuvre par un utilisateur, et peu coûteuse.

L'invention a également pour objectif de fournir une telle technique, qui soit facile à réaliser et à monter sur un véhicule.

Selon un aspect particulier de l'invention, celle-ci a ainsi pour objectif de fournir une telle technique incitant le montage chez un constructeur automobile. Ces objectifs, ainsi que d'autres qui apparaîtront plus clairement par la suite, sont atteints selon l'invention à l'aide d'un système de stockage et/ou d'utilisation de barres de galerie pour véhicule automobile, selon la revendication 1.

Ces barres peuvent permettre la réception, le maintien et le stockage d'objets divers. Leur position est réglable, de façon continue ou indexée, le long des premiers rails.

De plus, lorsqu'elles ne sont pas utilisées à l'extérieur du véhicule, les barres de galerie peuvent être stockées à l'intérieur du véhicule, où elles sont protégées contre les intempéries et le vol. En outre, elles peuvent être utilisées pour recevoir et maintenir des objets.

De façon préférentielle, lesdits premiers rails et lesdits seconds rails présentent des sections intérieures identiques, de façon que lesdites barres de tirage puissent être montées directement à l'intérieur ou à l'extérieur dudit véhicule.

Ainsi, aucun réglage n'est nécessaire pour transférer les barres de galerie dans l'intérieur à l'extérieur du véhicule, et inversement (exception faite, le cas échéant, d'un réglage de l'écartement entre les pieds de la barre).

En effet, avantageusement, lesdites traverses sont de longueur variable. Cela permet de s'adapter à la place disponible à l'intérieur du véhicule, et/ou de mettre en oeuvre des rails (à l'intérieur et/ou à l'extérieur) non parallèles.

Selon un mode de réalisation préférentiel de l'invention, lesdits seconds rails sont solidarisés au pavillon dudit véhicule.

On peut également prévoir de les monter sur une paroi latérale du véhicule, ou sur le plancher de celui-ci.

Avantageusement, lesdits seconds rails s'étendent sensiblement parallèlement à l'axe principal dudit véhicule. Ils peuvent bien sûr prendre d'autres positions, et par exemple s'étendre sensiblement perpendiculairement à cet axe principal.

Selon un aspect particulier de l'invention, le système peut comprendre des moyens de rangement et/ou d'escamotage desdites barres, lorsqu'elles sont montées sur lesdits seconds rails.

Ainsi, les traverses ne sont pas visibles lorsqu'elles ne sont pas utilisées.

De façon avantageuse, le système de l'invention comprend des moyens de réception et/ou de maintien d'au moins un objet, solidarisés ou solidarisables à au moins une desdites barres.

Lesdits moyens de réception et/ou de maintien peuvent ainsi notamment comprendre un filet ou une toile susceptible d'être tendu(e) entre lesdites traverses, et/ou des moyens d'accrochage d'au moins un objet.

L'invention concerne également un pavillon de véhicule automobile, permettant la mise en oeuvre d'un tel système, et comprenant un tel système.

Le pavillon peut ainsi être livré pré-équipé à un constructeur automobile. Les barres de galerie, et le cas échéant d'autres équipements, peuvent être montés sur le pavillon.

L'invention concerne encore les véhicules automobiles équipés d'un tel système.

D'autres caractéristiques et avantages de l'invention apparaîtront à la lecture de la description suivante d'un mode de réalisation préférentiel de l'invention, donné à titre de simple exemple illustratif et non limitatif, et des dessins annexés parmi lesquels :
- la figure 1, déjà commentée en préambule, présente schématiquement la structure d'une part de galerie à longueur variable, selon une approche connue en soi ;
- les figures 2a et 2b illustrent la mise en oeuvre d'une barre de galerie selon la figure 1 sur des longerons de pavillon non parallèles ;
- la figure 3 présente une coupe d'un exemple de pavillon mettant en oeuvre le système de l'invention ;
- la figure 4 illustre un exemple d'utilisation du système de la figure 3, pour le maintien en hauteur d'objets dans le véhicule.

Le système de l'invention repose donc sur la mise en oeuvre de rails de réception et/ou de guidage de barres de galerie, ou de traverses similaires, à l'intérieur d'un véhicule, et en particulier sur la face interne du pavillon de ce dernier.

Cette approche permet, selon les cas, d'optimiser l'utilisation de l'espace de stockage d'objets, en particulier en exploitant la partie supérieure, en équipant ces barres de galerie de moyens de réception d'objets, par exemple sous la forme d'un filet tendu entre deux barres ou d'un élément rigide adapté. Des systèmes d'accrochage peuvent également être prévus.

Selon un autre aspect avantageux, cette technique permet de stocker à l'intérieur du véhicule, sans encombrer l'espace inférieur du coffre, les barres de galerie lorsqu'elles ne sont pas utilisées. On limite ainsi les risques de vol et on réduit la consommation, ainsi que l'usure de ces barres.

Comme illustré par la vue en coupe de la figure 3, la mise en oeuvre de l'invention est particulièrement simple. Il suffit en effet d'équiper la face intérieure I (face du pavillon tournée vers l'intérieur du véhicule) de rails 32₁, 32₂, similaires aux rails 33₁, 33₂, montés classiquement sur la face extérieure E de ce pavillon.

Il est ainsi possible de monter les barres de galerie classiquement d'une part sur la face extérieure du véhicule (35) et, selon l'approche nouvelle de l'invention, à l'intérieur du véhicule (34). Cette figure 3 montre une situation intermédiaire, à titre illustratif, dans laquelle une barre 35 est sur le pavillon et l'autre 34 à l'intérieur du véhicule.

La technique de l'invention s'applique de façon avantageuse aux barres de galerie de largeur variable, tel qu'illustré par exemple en figure 1. Il est ainsi possible que les écartements entre les rails 32₁ et 32₂ varient (rails non parallèles) et/ou soient différents de ceux des rails 33₁, 33₂.

L'invention permet donc de stocker de façon simple et efficace des barres de galerie à l'intérieur du véhicule, lorsqu'elles ne sont pas utilisées. Pour cette application particulière, il suffit que les rails intérieurs 32₁ et 32₂ soient de taille suffisante pour accueillir les deux rails. On peut en outre prévoir un habillage, par exemple sous la forme d'un coffre, ou d'une toile, dissimulant les barres lorsqu'elles sont stockées.

Cependant, avantageusement, on peut également exploiter les barres 34 à l'intérieur du véhicule, pour le transport d'objets, comme illustré en figure 4.

Ainsi, on peut monter un filet 41, ou une toile, ou encore un élément rigide. Le filet 41 permet de recevoir, de stocker et de maintenir efficacement des objets, tout en libérant l'espace au niveau inférieur du véhicule, par exemple pour y stocker des objets de taille plus importante. Selon un mode de réalisation particulier, le filet 41 peut être monté sur un enrouleur, solidarisé ou solidarisable au pavillon du véhicule et/ou aux barres 42.

On peut également prévoir divers systèmes d'accrochage, par exemple sous la forme d'un ou plusieurs crochets 43 auxquels on peut suspendre un objet 44.

Plus généralement, l'homme du métier imaginera aisément différents modes d'accrochage et de fixation d'objets, en fonction des besoins.

Selon un mode de mise en oeuvre avantageux, le pavillon du véhicule est pré-équipé des rails 32₁, 32₂, 33₁ et 33₂. Ainsi le constructeur automobile recevant ce pavillon n'a plus qu'à le solidariser au châssis du véhicule, déjà pré-équipé. Le pré-équipement ne se limite pas obligatoirement à ces rails. Le pavillon peut également être livré équipé des barres de galeries, et de nombreux autres équipements et accessoires.

Ce pavillon peut être un pavillon de type classique, ou encore un pavillon transparent, par exemple en verre ou en polycarbonate.

La description du mode de réalisation qui précède repose sur la mise en oeuvre de barres de galerie à l'intérieur du véhicule. Dans certains modes de réalisation, ces barres de galerie peuvent bien sûr être remplacées par des traverses spécifiquement destinées à l'utilisation à l'intérieur du véhicule, en remplacement ou en complément des barres de galerie.

Par ailleurs, on a décrit des rails 32₁, 32₂ s'étendant sensiblement parallèlement à l'axe principal. Les rails peuvent également être montés perpendiculairement à cet axe principal du véhicule, notamment si la largeur disponible est insuffisante.

On peut également prévoir, notamment dans les véhicules utilitaires, des rails intérieurs montés sur une paroi latérale du véhicule. Il est également envisageable de rapporter ces rails sur le plancher du coffre.

## Revendications

1. Système de stockage et/ou d'utilisation de barres de galerie (34, 35) pour véhicule automobile, comprenant au moins deux premiers rails de guidage (33₁, 33₂) placés sur le pavillon dudit véhicule, à l'extérieur dudit véhicule, sur lesquels lesdites barres de galerie peuvent être montées,
**caractérisé en ce que**, le système comprend au moins deux seconds rails de maintien et/ou guidage (32₁, 32₂) montés à l'intérieur dudit véhicule, sur lesquels lesdites barres de galerie peuvent également être montées.

2. Système selon la revendication 1, **caractérisé en ce que** lesdits premiers rails (33₁, 33₂) et lesdits seconds rails (32₁, 32₂) présentent des sections intérieures identiques, de façon que lesdites barres de galerie (34, 35) puissent être montées directement à l'intérieur ou à l'extérieur dudit véhicule.

3. Système selon l'une quelconque des revendications 1 et 2, **caractérisé en ce que** lesdites barres de galerie sont de longueur variable.

4. Système selon l'une quelconque des revendications 1 à 3, **caractérisé en ce que** lesdits seconds rails (32₁, 32₂) sont solidarisés au pavillon dudit véhicule.

5. Système selon l'une quelconque des revendications 1 à 4, **caractérisé en ce que** lesdits seconds rails (32₁, 32₂) s'étendent sensiblement parallèlement à l'axe principal dudit véhicule.

6. Système selon l'une quelconque des revendications 1 à 5, **caractérisé en ce qu**'il comprend des moyens de rangement et/ou d'escamotage desdites barres de galerie, lorsqu'elles sont montées sur lesdits seconds rails (32₁, 32₂).

7. Système selon l'une quelconque des revendications 1 à 6, **caractérisé en ce qu**'il comprend des moyens de réception et/ou de maintien d'au moins un objet, solidarisés ou solidarisables à au moins une desdites barres de galerie.

8. Système selon la revendication 7, **caractérisé en ce que** lesdits moyens de réception et/ou de maintien comprennent un filet (41) ou une toîle susceptible d'être tendu(e) entre lesdites barres de galerie.

9. Système selon l'une quelconque des revendications 7 et 8, **caractérisé en ce que** lesdits moyens de réception et/ou de maintien comprennent des moyens d'accrochage (43) d'au moins un objet.

10. Pavillon de véhicule automobile, comprenant un système de stockage et/ou d'utilisation selon la revendication 1.

11. Véhicule automobile comprenant un système de stockage et/ou d'utilisation selon la revendication 1.

## Claims

1. System for storing and/or using roof rack bars (34, 35) for a motor vehicle, said system comprising at least two first guide rails (33₁, 33₂) which are located on the roof of the said vehicle, on the outside of the said vehicle, and on which the said roof rack bars can be mounted,
**characterised in that** the system comprises at least two second holding and/or guide rails (32₁, 32₂) which are mounted on the inside of the said vehicle and on which the said roof rack bars can likewise be mounted.

2. System according to claim 1, **characterised in that** the said first rails (33₁, 33₂) and the said second rails (32₁, 32₂) have identical internal sections, so that the said roof rack bars (34, 35) can be mounted directly on the inside or on the outside of the said vehicle.

3. System according to either of claims 1 and 2, **characterised in that** the said roof rack bars are of variable length.

4. System according to any one of claims 1 to 3, **characterised in that** the said second rails (32₁, 32₂) are interlocked with the roof of the said vehicle.

5. System according to any one of claims 1 to 4, **characterised in that** the said second rails (32₁, 32₂) extend substantially parallel to the main axis of the said vehicle.

6. System according to any one of claims 1 to 5, **characterised in that** it comprises means for stowing and/or retracting the said roof rack bars when they are mounted on the said second rails (32₁, 32₂).

7. System according to any one of claims 1 to 6, **characterised in that** it comprises means for receiving and/or holding at least one object, which are interlocked, or can be interlocked, with at least one of the said roof rack bars.

8. System according to claim 7, **characterised in that** the said receiving and/or holding means comprise a net (41) or a cloth which is capable of being stretched out between the said roof rack bars.

9. System according to either of claims 7 and 8, **characterised in that** the said receiving and/or holding means comprises hitching means (43) for at least one object.

10. Roof of a motor vehicle, comprising a system according to claim 1 for storing and/or using.

11. Motor vehicle, comprising a system according to claim 1 for storing and/or using.

## Patentansprüche

1. System zum Aufbewahren und/oder Verwenden von Dachgepäckträgerstangen (34, 35) für Kraftfahrzeuge, das mindestens zwei erste Führungsschienen (33₁, 33₂) aufweist, die auf dem Dach des besagten Fahrzeugs, außerhalb des Fahrzeugs, angebracht werden, wobei die besagten Dachgepäckträgerstangen auf diese Führungsschienen angebracht werden können,
**dadurch gekennzeichnet, dass** das System mindestens zwei zweite Halte- und/oder Führungsschienen (32₁, 32₂) aufweist, die im Inneren des Fahrzeugs angebracht werden und auf welchen die besagten Dachgepäckträgerstangen ebenfalls angebracht werden können.

2. System nach Anspruch 1,
**dadurch gekennzeichnet, dass** die ersten Schienen (33₁, 33₂) und die zweiten Schienen (32₁, 32₂) identische innere Querschnitte aufweisen, wodurch das Anbringen der Dachgepäckträgerstangen (34, 35) direkt im Fahrzeuginneren oder -äußeren ermöglicht wird.

3. System nach einem der Ansprüche 1 und 2,
**dadurch gekennzeichnet, dass** die besagten Dachgepäckträgerstangen variable Längen aufweisen.

4. System nach einem der Ansprüche 1 bis 3,
**dadurch gekennzeichnet, dass** die zweiten Schienen (32₁, 32₂) mit der Decke des Fahrzeugs verbunden sind.

5. System nach einem der Ansprüche 1 bis 4,
**dadurch gekennzeichnet, dass** die zweiten Schienen (32₁, 32₂) sich in etwa parallel zur Hauptachse des Fahrzeugs erstrecken.

6. System nach einem der Ansprüche 1 bis 5,
**dadurch gekennzeichnet, dass** es Mittel zum Aufbewahren und/oder Verbergen der besagten Dachgepäckträgerstangen aufweist, wenn diese an den zweiten Schienen (32₁, 32₂) angebracht sind.

7. System nach einem der Ansprüche 1 bis 6,
**dadurch gekennzeichnet, dass** es Mittel zum Aufnehmen und/oder Halten von mindestens einem Gegenstand aufweist, wobei dieser Gegenstand (diese Gegenstände) mit mindestens einer der besagten Dachgepäckträgerstangen verbunden ist (sind) bzw. verbunden werden kann (können).

8. System nach Anspruch 7,
**dadurch gekennzeichnet, dass** die besagten Mittel zum Aufnehmen und/oder Halten ein Netz (41) oder eine Stoffbahn aufweisen, das bzw. die zwischen den Dachgepäckträgerstangen gespannt werden kann.

9. System nach einem der Ansprüche 7 oder 8,
**dadurch gekennzeichnet, dass** die Mittel zum Aufnehmen und/oder Halten Mittel zum Aufhängen (43) mindestens eines Gegenstandes aufweisen.

10. Dach eines Fahrzeugs, welches ein System nach Anspruch 1 zum Aufbewahren und/oder Verwenden aufweist.

11. Fahrzeug, welches ein System nach Anspruch 1 zum Aufbewahren und/oder Verwenden aufweist.
